(19) **Europäisches Patentamt European Patent Office Office européen des brevets**

(11) **EP 4 763 583 A1**

(12) **EUROPEAN PATENT APPLICATION**
published in accordance with Art. 153(4) EPC

(43) Date of publication:
**24.06.2026 Bulletin 2026/26**

(21) Application number: **24854086.6**

(22) Date of filing: **08.07.2024**

(51) International Patent Classification (IPC):
***B60L 15/20*** (2006.01)        ***B60L 9/18*** (2006.01)

(52) Cooperative Patent Classification (CPC):
**B60L 9/18; B60L 15/20**

(86) International application number:
**PCT/JP2024/024575**

(87) International publication number:
**WO 2025/037495 (20.02.2025 Gazette 2025/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.08.2023 JP 2023132551**

(71) Applicant: **Mitsubishi Jidosha Kogyo Kabushiki Kaisha Tokyo 108-8410 (JP)**

(72) Inventors:
• **TAKAHASHI, Ryota**
 **Tokyo 108-8410 (JP)**
• **TAKAHASHI, Naoki**
 **Tokyo 108-8410 (JP)**
• **OKAMURA, Yutaro**
 **Tokyo 108-8410 (JP)**
• **ISHIHARA, Yuji**
 **Tokyo 108-8410 (JP)**

(74) Representative: **Vossius & Partner Patentanwälte Rechtsanwälte mbB Siebertstraße 3 81675 München (DE)**

(54) **VEHICLE CONTROL DEVICE AND VEHICLE CONTROL METHOD**

(57)    A vehicle control device (10) of a vehicle including left and right drive systems includes a calculation unit (13), a sum model, a difference model, a state calculation unit (14), and a control unit (15). The calculation unit (13) calculates a sum equivalent value equivalent to a sum of required left and right torques and a difference equivalent value equivalent to a difference between the required left and right torques. The sum model is a model that is obtained by modeling motion states of the left and right drive systems during straight traveling of the vehicle (1) and to which the sum equivalent value is applied. The difference model is a model that is obtained by modeling motion states of the left and right drive systems during turning of the vehicle (1) and to which the difference equivalent value is applied. The control unit (15) controls outputs of the left drive source and the right drive source using a sum mode instruction torque and a difference mode instruction torque obtained by applying the sum equivalent value and the difference equivalent value to the sum model and the difference model, respectively. The state calculation unit (14) calculates a road surface state value. A load side inertia moment configuring a transfer function included in each of the sum model and the difference model is calculated based on the road surface state value.

FIG. 5

**Description**

[Technical Field]

The present disclosure relates to a vehicle control device and a vehicle control method for controlling a drive source mounted on a vehicle.

[Background Art]

In the related art, in a vehicle including a plurality of drive sources, a method for controlling an operation state of each drive source while suppressing vibration of a driving force transmission system using a vehicle model in which a behavior of the drive force transmission system is modeled is known (see PTL 1).

[Citation List]

[Patent Literature]

[PTL 1]
JP 2019-103249 A

[Summary of Invention]

[Technical Problem]

The behavior (for example, vibration) of the driving force transmission system is different between when the vehicle travels straight and when the vehicle turns. For this reason, it is necessary to construct control corresponding to when the vehicle travels straight and control corresponding to when the vehicle turns, and there is a problem that a control configuration tends to be complicated. In addition, since the traveling state of the vehicle may be a complex state in which a straight traveling state (translational motion) and a turning state (yaw motion) are mixed, there is a problem that it is difficult to improve controllability. For example, when control for suppressing vibration of one of left and right axles is performed, the control (output) also affects the other axle. Thus, it is necessary to perform non-interference so as not to affect each other, and the control configuration becomes complicated. That is, it is difficult to appropriately suppress the vibration at each of the left and right axles with respect to vibration characteristics different between during straight traveling and during turning. The behavior of the driving force transmission system is different not only in the above-described traveling state but also in a road surface state on which the vehicle travels (for example, when the vehicle travels on a low $\mu$ road and when the vehicle travels on a high $\mu$ road). For this reason, it is desirable to appropriately suppress vibration at each of the left and right axles with respect to not only vibration characteristics different between during straight traveling and during turning but also vibration characteristics different depending on a road surface state.

One of the objects of the present disclosure is to provide a vehicle control device and a vehicle control method which are created in view of the above problems and are capable of suppressing vibration of left and right axles without interfering with each other with a simple configuration, with respect to vibration characteristics different depending on a road surface state in addition to vibration characteristics different between during straight traveling and during turning. Note that, in addition to this object, other objects of the present disclosure involve achieving operations and effects derived from configurations described in "Description of Embodiments" to be described later, which cannot be obtained by techniques in the related art.

[Solution to Problem]

The disclosed invention can be realized as aspects (application examples) to be disclosed below, and solves at least a part of the above problems. Second and subsequent aspects are all aspects that can be additionally selected as appropriate, and are all aspects that can be omitted. None of the second and subsequent aspects discloses an aspect or configuration that is essential to the present disclosure.

Aspect 1. A vehicle control device according to the present disclosure is a vehicle control device that controls outputs of a left drive source and a right drive source in a vehicle including a left drive system including a left axle and a left wheel to which power from the left drive source is transmitted, and a right drive system including a right axle and a right wheel to which power from the right drive source is transmitted. The vehicle control device includes a sum model that is obtained by modeling motion states of the left drive system and the right drive system during straight traveling of the vehicle, and a difference model that is obtained by modeling motion states of the left drive system and the right drive system during turning of the vehicle. The vehicle control device further includes a calculation unit, a state calculation unit, and a control unit.

The calculation unit calculates a sum equivalent value equivalent to a sum of a required left torque, which is a required torque for the left drive system or the left drive source, and a required right torque, which is a required torque for the right drive system or the right drive source, and calculates a difference equivalent value equivalent to a difference between the required left torque and the required right torque. The sum equivalent value is applied to the sum model, and the difference equivalent value is applied to the difference model. The state calculation unit calculates a road surface state value representing a road surface state of the vehicle.

Both the sum model and the difference model are two-inertia system models. The sum model includes a transfer function representing input and output characteristics of a two-inertia system including a driving side inertia moment calculated based on an inertia moment of the left drive source and an inertia moment of the right drive source, a spring damper designed with rigidity and viscosity, and a load side inertia moment calculated based on a vehicle body weight and the road surface state value of the vehicle. The difference model includes a transfer function representing input and output characteristics of a two-inertia system including a driving side inertia moment which is an equivalent inertia moment when a left-right difference calculated based on a torque difference amplification factor occurs, a spring damper designed with rigidity and viscosity, and a load side inertia moment calculated based on a yaw inertia moment and the road surface state value of the vehicle.

The control unit controls outputs of the left drive source and the right drive source by using a sum mode instruction torque obtained by applying the sum equivalent value to the sum model and a difference mode instruction torque obtained by applying the difference equivalent value to the difference model.

Aspect 2. In an aspect including the above-described aspect 1, it is preferable that the road surface state value is calculated from actual slip ratios of the left wheel and the right wheel.

Aspect 3. In an aspect including the above aspect 1, it is preferable that the vehicle control device further includes a traction control unit that performs traction control for reducing the required left torque and the required right torque when slipping of the vehicle is detected. In this case, it is preferable that the road surface state value is calculated based on an execution state of the traction control by the traction control unit.

Aspect 4. A vehicle control method according to the present disclosure is a vehicle control method for controlling outputs of a left drive source and a right drive source in a vehicle including a left drive system including a left axle and a left wheel to which power from the left drive source is transmitted and a right drive system including a right axle and a right wheel to which power from the right drive source is transmitted. First, the vehicle control method includes preparing in advance a sum model that is obtained by modeling motion states of the left drive system and the right drive system during straight traveling of the vehicle, and a difference model that is obtained by modeling motion states of the left drive system and the right drive system during turning of the vehicle.

Both the sum model and the difference model are two-inertia system models. The sum model includes a transfer function representing input and output characteristics of a two-inertia system including a driving side inertia moment calculated based on an inertia moment of the left drive source and an inertia moment of the right drive source, a spring damper designed with rigidity and viscosity, and a load side inertia moment calculated based on a vehicle body weight of the vehicle and a road surface state value representing a road surface state of the vehicle. The difference model includes a transfer function representing input and output characteristics of a two-inertia system including a driving side inertia moment which is an equivalent inertia moment when a left-right difference calculated based on a torque difference amplification factor occurs, a spring damper designed with rigidity and viscosity, and a load side inertia moment calculated based on a yaw inertia moment and the road surface state value of the vehicle.

The vehicle control method includes calculating a sum equivalent value equivalent to a sum of a required left torque, which is a required torque for the left drive system or the left drive source, and a required right torque, which is a required torque for the right drive system or the right drive source, and calculating a difference equivalent value equivalent to a difference between the required left torque and the required right torque. The vehicle control method includes acquiring a sum mode instruction torque by applying the sum equivalent value to the sum model and acquiring a difference mode instruction torque by applying the difference equivalent value to the difference model. The vehicle control method includes controlling outputs of the left drive source and the right drive source by using the sum mode instruction torque and the difference mode instruction torque.

[Advantageous Effects of Invention]

According to the disclosed vehicle control device and vehicle control method, left and right drive sources are controlled using a sum mode instruction torque obtained by applying a sum equivalent value to a sum model and a difference mode instruction torque obtained by applying a difference equivalent value to a difference model. In the sum model, a load side inertia moment configuring a transfer function representing input and output characteristics of a two-inertia system thereof is calculated based on a road surface state value. In the difference model, a load side inertia moment configuring a transfer function representing input and output characteristics of a two-inertia system thereof is calculated based on a road surface state value. Thereby, vibrations of left and right axles can be suppressed without interfering with each other with respect to both vibration characteristics different between during straight traveling and during turning and vibration characteristics different depending on a road surface state. Since complicated non-interference control is unnecessary, vibration suppression can be achieved with a simple configuration.

[Brief Description of Drawings]

[Fig. 1]

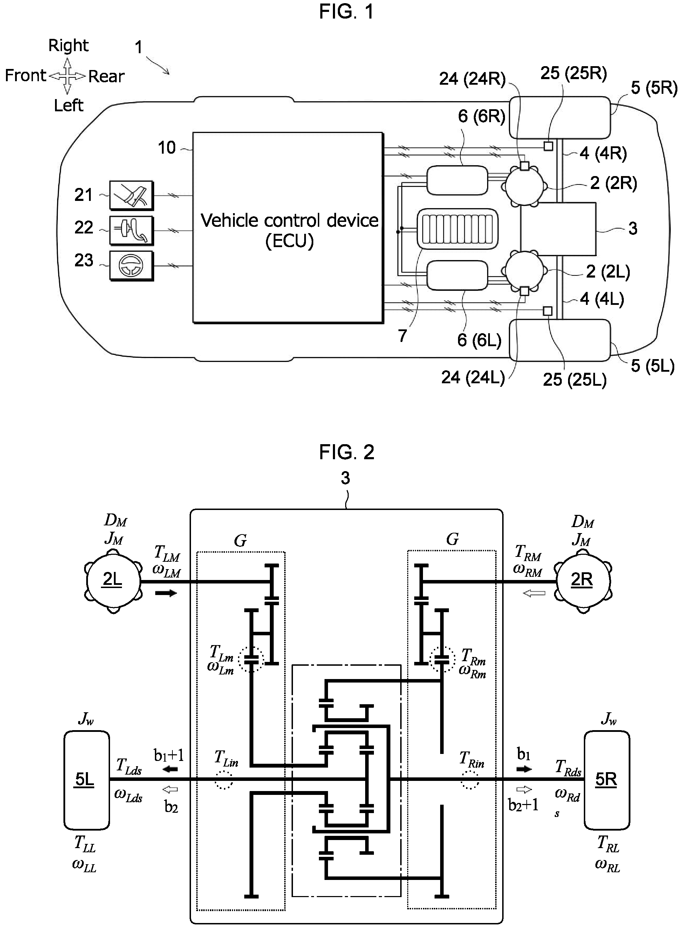

Fig. 1 is a block diagram illustrating configurations of a vehicle control device and a vehicle.
[Fig. 2]
Fig. 2 is a schematic view illustrating an example of a structure of a drive system of a vehicle.
[Fig. 3]

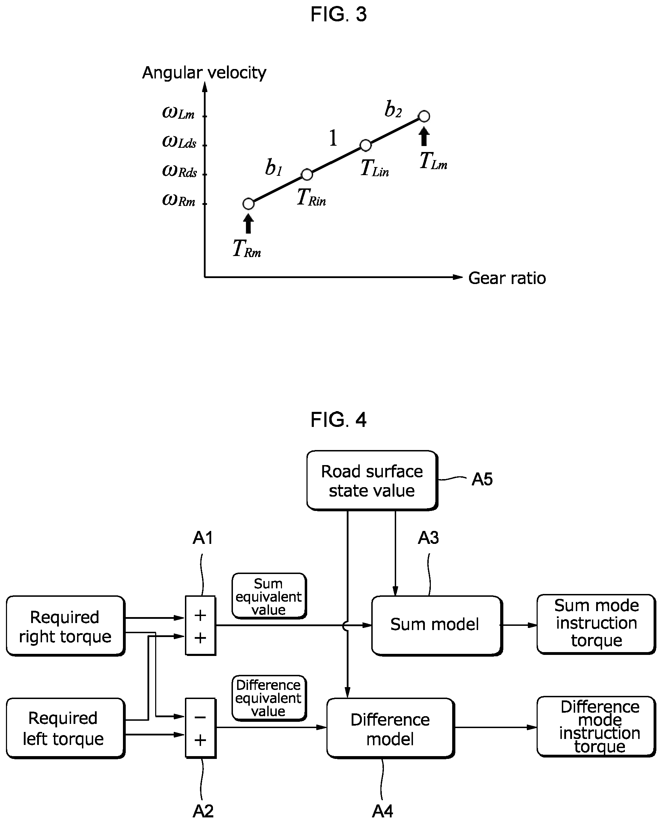

Fig. 3 is a speed diagram of a power distribution mechanism of a vehicle having the structure of Fig. 2.
[Fig. 4]
Fig. 4 is a block diagram illustrating a flow of a vehicle control method.
[Fig. 5]

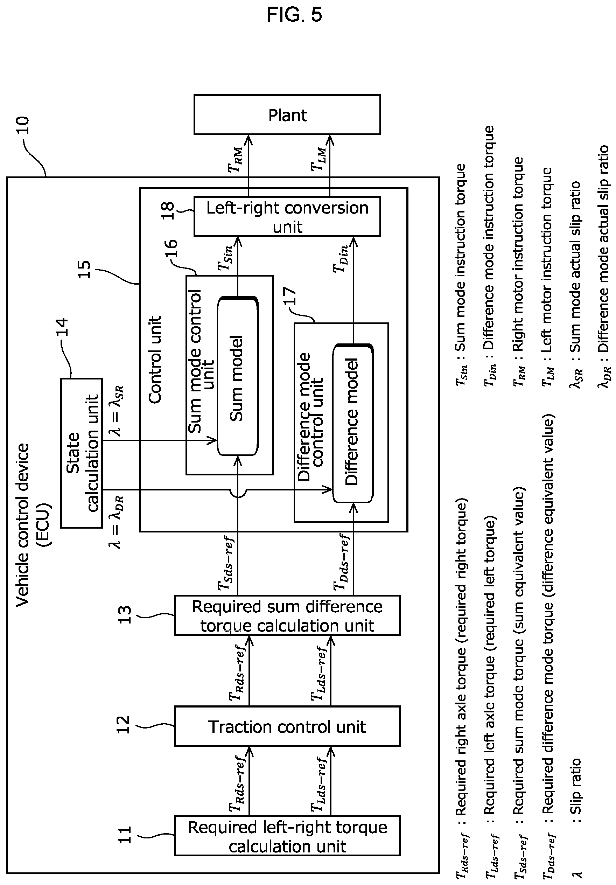

Fig. 5 is a block diagram illustrating a logic of vibration suppression control performed by the vehicle control device when a road surface state value is calculated by a first method.
[Fig. 6]

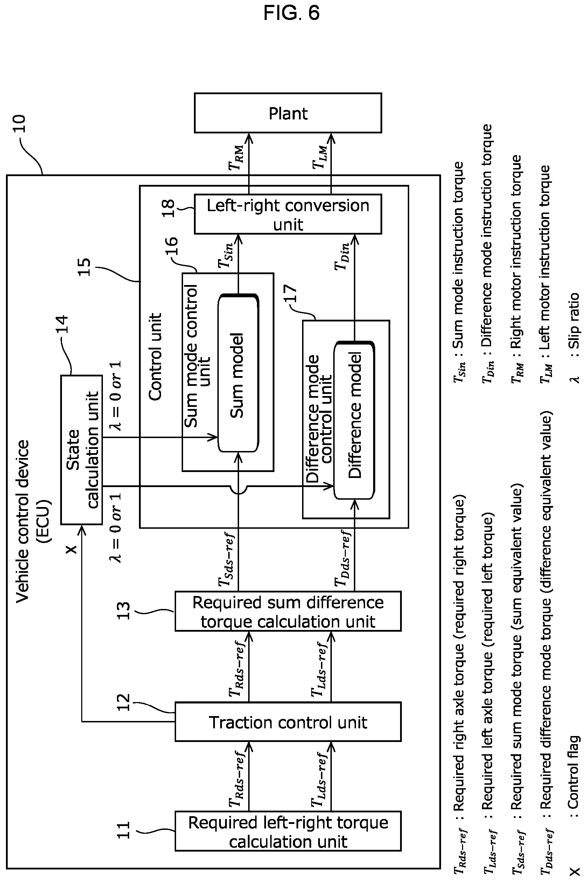

Fig. 6 is a block diagram illustrating a logic of vibration suppression control performed by the vehicle control device when a road surface state value is calculated by a second method.
[Fig. 7]

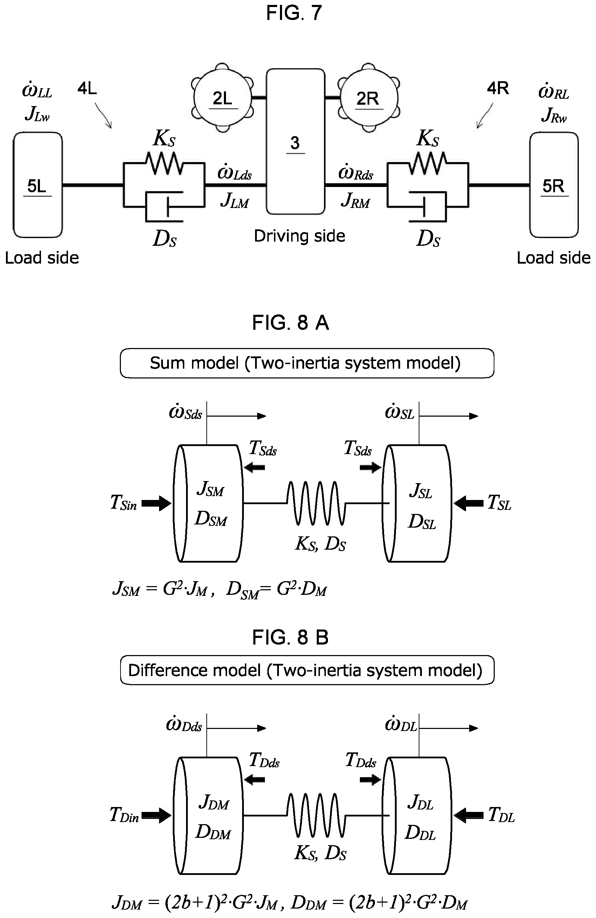

Fig. 7 is a schematic diagram schematically illustrating structures of a left drive system and a right drive system of a vehicle.
[Fig. 8]
Fig. 8A is a schematic diagram of a sum model, and Fig. 8B is a schematic diagram of a difference model.
[Fig. 9]

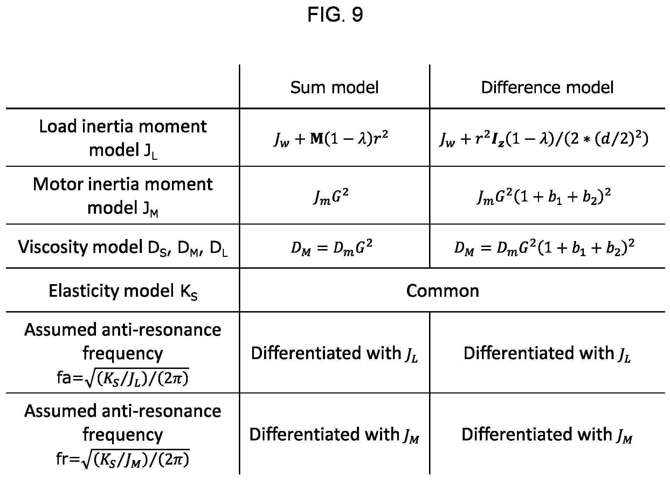

Fig. 9 is a table in which parameters are decomposed into a sum mode and a difference mode by a transfer function formula derived as an example.

[Description of Embodiments]

The type of vehicle in which the disclosed vehicle control device and vehicle control method are used is, for example, an engine vehicle (gasoline automobile, diesel automobile), an electric vehicle, or a hybrid vehicle, and is an automobile that travels by driving left and right wheels (left and right drive wheels) using at least one or more drive sources (internal combustion engine or motor), preferably, using a plurality of drive sources. Here, one of the plurality of drive sources is referred to as a left drive source, and one of the other drive sources is referred to as a right drive source. One of the left and right wheels located on the left side of the vehicle is referred to as a left wheel, and the other is referred to as a right wheel. The disclosed vehicle control device and vehicle control method can be used to control a vehicle including a left drive system including a left axle and a left wheel to which power from a left drive source is transmitted, and a right drive system including a right axle and a right wheel to which power from a right drive source is transmitted.

The layout of each of the left drive source and the right drive source may or may not be set to correspond to the left-right direction determined based on a traveling direction of the vehicle. In addition, the left drive system and the right drive system may operate independently of each other, or may be connected to each other via a transmission mechanism or a power distribution mechanism. The disclosed vehicle control device and vehicle control method can be utilized for control of an in-wheel motor vehicle in which each of the left and right wheels is driven by an individual motor, and can also be utilized for control of a torque vectoring vehicle in which the left and right wheels can transmit a driving force and a torque to each other.

[Examples]

1. Configuration

A vehicle control device 10 as an example is mounted on a vehicle 1 illustrated in Fig. 1. The vehicle 1 includes left and right wheels 5 (wheels) disposed lined up in the vehicle width direction, a power distribution mechanism 3 (differential mechanism) that applies a torque difference to the left and right wheels 5, and a pair of motors 2 connected to the power distribution mechanism 3. In the drawing of the example, alphabets L and R added to numerical symbols represent arrangement positions of elements according to the symbols (on the left side or the right side of the vehicle 1). For example, symbol 5L represents one (left wheel) of the left and right wheels 5 located on the left side of the vehicle 1, and symbol 5R represents the other (right wheel) located on the right side. The positions of the left and right wheels 5 in the front-rear direction are not limited, and may be the front wheels or the rear wheels of the vehicle 1.

The motor 2 (drive source) has a function of driving at least one of the front wheels or the rear wheels of the vehicle 1, and can have a function of driving all the four wheels. One of the pair of motors 2 which is disposed on the left side is a left motor 2L (left drive source), and the other disposed on the right side is a right motor 2R (right drive source). The left motor 2L and the right motor 2R operate independently of each other, and can individually output driving forces of different magnitudes. These motors 2 are connected to the power distribution mechanism 3 via a pair of speed reduction mechanisms provided separately from each other.

The vehicle 1 includes the power distribution mechanism 3 that amplifies a torque difference between the pair of motors 2 and distributes torque to each of the left and right wheels 5. The power distribution mechanism 3 of the present example is a differential mechanism having a yaw control function (active yaw control (AYC) function), and is interposed between an axle 4 (left axle 4L) connected to the left wheel 5L and an axle 4 (right axle 4R) connected to the right wheel 5R. The yaw control function is a function of adjusting the yaw moment and stabilizing the posture of the vehicle 1 by actively controlling a sharing ratio of the driving forces (driving torque) of the left and right wheels 5. A planetary gear mechanism, a differential gear mechanism, and the like are incorporated in the power distribution mechanism 3. A vehicle drive device including the pair of motors 2 and the power distribution mechanism 3 is also referred to as a dual motor AYC (DM-AYC) device.

As illustrated in Fig. 2, the power distribution mechanism 3 includes a pair of speed reduction mechanisms (gear trains surrounded by a broken line in Fig. 2) that reduce the rotational speed of the motor 2, and a transmission mechanism (gear trains surrounded by an alternating dotted-dashed line in Fig. 2). The speed reduction mechanism is a mechanism that increases a torque by decelerating the speed of motor torque (driving force) output from the motor 2. A reduction ratio G of the speed reduction mechanism is appropriately set in accordance with the output characteristics and performance of the motor 2. When the torque performance of the motor 2 is sufficiently high, the speed reduction mechanism may be omitted. The transmission mechanism is a mechanism that amplifies a torque difference transmitted to each of the left and right wheels 5.

The transmission mechanism of the power distribution mechanism 3 illustrated in Fig. 2 includes a pair of planetary gear mechanisms. These planetary gear mechanisms have a structure in which rotation axes of planetary gears provided in respective carriers are connected to each other. Each carrier rotatably supports the planetary gear and supports the planetary gear so as to revolve between a sun gear and a ring gear. Driving forces transmitted from the left and right motors 2 are input to a ring gear and a sun gear of one planetary gear mechanism. The driving forces transmitted to the left and right wheels 5 are extracted from a sun gear and a carrier of the other planetary gear mechanism. The structure of the power distribution mechanism 3 illustrated in Fig. 2 is merely an example for implementing the yaw control function, and other known structures can be used.

In Fig. 2, $J_M$ represents a motor inertia moment (the moment of inertia of the motor 2), $D_M$ represents a motor viscosity (viscosity of the motor 2), and $J_w$ represents a wheel inertia moment (the moment of inertia of the left and right wheels 5). Regarding the parameters of the left drive system, $T_{LM}$ is a left motor input torque (left motor instruction torque), $T_{Lm}$ is a left motor input torque after deceleration by a deceleration mechanism, $\omega_{LM}$ is a left motor angular velocity, $\omega_{Lm}$ is a left motor angular velocity after deceleration by the deceleration mechanism, $T_{Lin}$ is a left driving side torque, $T_{Lds}$ is a left axle torque, $T_{LL}$ is a left wheel load side torque, $\omega_{Lds}$ is a left driving side angular velocity, and $\omega_{LL}$ is a left wheel angular velocity. Similarly, regarding the parameters of the right drive system, $T_{RM}$ is a right motor input torque (right motor instruction torque), $T_{Rm}$ is a right motor input torque after deceleration by the deceleration mechanism, $\omega_{RM}$ is a right motor angular velocity, $\omega_{Rm}$ is a right motor angular velocity after deceleration by the deceleration mechanism, $T_{Rin}$ is a right driving side torque, $T_{Rds}$ is a right axle torque, $T_{RL}$ is a right wheel load side torque, $\omega_{Rds}$ is a right driving side angular velocity, and $\omega_{RL}$ is a right wheel angular velocity.

Fig. 3 is a speed diagram of the power distribution mechanism 3. In Figs. 2 and 3, $b_1$ and $b_2$ represent torque difference amplification factors (deceleration rate, differential deceleration ratio) determined in accordance with the structure of the gear incorporated in the power distribution mechanism 3. The torque difference amplification factor related to the power transmission from the left motor 2L to the right wheel 5R is $b_1$, and a torque difference amplification factor related to the power transmission from the left motor 2L to the left wheel 5L is $b_1+1$. The torque difference amplification factor related to the power transmission from the right motor 2R to the left wheel 5L is $b_2$, and a torque difference amplification factor related to the power transmission from the right motor 2R to the right wheel 5R is $b_2+1$.

As illustrated in Fig. 1, each of the pair of motors 2 is electrically connected to a battery 7 via an inverter 6 (6L, 6R). The inverter 6 is a conversion device (DC-AC inverter) that mutually converts power (DC power) of a DC circuit on the battery 7 side and power (AC power) of an AC circuit on the motor 2 side. The battery 7 is, for example, a lithium ion secondary battery or a nickel-metal hydride secondary battery, and is a secondary battery capable of supplying a high voltage direct current of several hundred volts. During powering of the motor 2, the DC power is converted into AC power by the inverter 6 and supplied to the motor 2. During power generation by the motor 2, the generated power is converted into DC power by the inverter 6 and charged in the battery 7. The operating state of the inverter 6 is controlled by the vehicle control device 10.

The vehicle control device 10 is one of electronic control devices (ECU, Electronic Control Unit) mounted on the vehicle 1. The vehicle control device 10 has a function of controlling output for each of the left motor 2L and the right motor 2R in the vehicle 1 including the left drive system including the left axle 4L and the left wheel 5L to which power from the left motor 2L (left drive source) is transmitted and the right drive system including the right axle 4R and the right wheel 5R to which power from the right motor 2R (right drive source) is transmitted.

The vehicle control device 10 incorporates a processor (central processing unit), a memory (main memory), a storage device (storage), an interface device, and the like (not illustrated), which are communicably connected to each other via an internal bus. The contents of determination and control performed by the vehicle control device 10 are recorded and saved in the memory as firmware or an application program, and when the program is executed, the contents of the program are expanded in a memory space and executed by the processor.

An accelerator opening sensor 21, a brake sensor 22, a steering angle sensor 23, a resolver 24, and a wheel speed sensor 25 are connected to the vehicle control device 10. The accelerator opening sensor 21 is a sensor that detects a depression amount (accelerator opening) of an accelerator pedal and a depression speed thereof. The brake sensor 22 is a sensor that detects a depression amount (brake pedal stroke) of a brake pedal and a depression speed thereof. The steering angle sensor 23 is a sensor that detects steering angle (actual tire-turning angles or a rotation angle of a steering wheel) of the left and right wheels 5.

The resolver 24 (24L, 24R) is a sensor that detects the angular velocity of the motor 2, and is individually provided in each of the pair of motors 2. The resolver 24 outputs information on the rotation angle of the motor 2 as a two-phase AC voltage. The angular velocity of the motor 2 is grasped from changes in the AC voltage over time. The wheel speed sensor 25 (25L, 25R) is a sensor that detects the angular velocity of the axle 4. The vehicle control device 10 controls the output of the pair of motors 2 (2L, 2R) by controlling the operating state of the inverter 6 (6L, 6R) based on pieces of information detected by the various sensors 21 to 25 mentioned above. Instead of the resolver 24, another sensor (hall sensor, encoder, or the like) having a different internal structure and operation principle may be used.

2. Vehicle control device

Fig. 4 is a schematic block diagram illustrating a basic concept (flow) of control (output control for the motor 2, in which a vehicle control method as Example is used) performed by the vehicle control device 10. In the present control, vibration of the left drive system and vibration of the right drive system are divided into vibration during straight traveling of the vehicle 1 and vibration during turning of the vehicle 1, and the former is separated as vibration in a sum mode and the latter is separated as vibration in a difference mode. Then, a torque for suppressing vibration is acquired in each of the sum mode and the difference mode, and the acquired torque is returned to the left and right expressions and then output (instructed) to the left motor 2L and the right motor 2R.

In the storage device of the vehicle control device 10, a sum mode vibration suppressing model (hereinafter, also simply referred to as a "sum model") used in the sum mode and a difference mode vibration suppressing model (hereinafter, also simply referred to as a "difference model") used in the difference mode are stored in advance. That is, in the present vehicle control method, first, the sum model and the difference model are prepared. The sum model is a model that models motion states of the left drive system and the right drive system when the vehicle 1 travels straight, and the difference model is a model that models motion states of the left drive system and the right drive system when the vehicle 1 turns. The sum model and the difference model are models related to vibration suppressing.

In general, in the vehicle 1, vibrations generated during straight traveling and during turning are different from each other, and resonance frequencies are also different from each other. Depending on the type of the vehicle 1, for example, a resonance frequency during straight traveling is approximately 6 Hz, while a resonance frequency during turning is smaller than this, for example, approximately 2 Hz. In this manner, in order to effectively suppress the vibration different between when the traveling state of the vehicle 1 is a straight traveling state (translational motion) and when the traveling state of the vehicle 1 is a turning state (yaw motion) and to prevent the control (output) for suppressing the vibration from interfering with each other on the left and right sides, the vibration is separated into the above two modes and there are provided models used in the respective modes. That is, the sum model and the difference model are models used for causing the vibration suppression control to work in each of the straight traveling and the turning with respect to resonance frequencies different between the straight traveling and the turning.

As illustrated in Fig. 4, a sum equivalent value is applied to the sum model which consequently outputs (derives) a sum mode instruction torque for suppressing the vibration of the left drive system and the vibration of the right drive system during the straight traveling of the vehicle 1. Similarly, a difference equivalent value is applied to the difference model which consequently outputs (derives) a difference mode instruction torque for suppressing the vibration of the left drive system and the vibration of the right drive system during the turning of the vehicle 1. The sum equivalent value is a generic term for values equivalent to the sum of a required left torque that is a required torque for the left drive system or the left motor 2L and a required right torque that is a required torque for the right drive system or the right motor 2R. The sum equivalent value includes not only a simple sum but also a value obtained by multiplying the sum by a predetermined coefficient or a half value (arithmetic average value) of the sum. The difference equivalent value is a generic term for values equivalent to a difference between the required left torque and the required right torque. The difference equivalent value includes not only a simple difference but also a value obtained by multiplying the difference by a predetermined coefficient. In this manner, the required left torque and the required right torque are converted into expressions of the sum and the difference (sum equivalent value and difference equivalent value), and the converted expressions are applied to the sum model and the difference model, making it possible to cause the vibration suppression control to work in each of the states during straight traveling and during turning.

Here, as described above, the vibration generated during straight traveling is different from the vibration generated during turning, but vibration to be generated varies depending on a road surface state of the vehicle 1 (between traveling on a high $\mu$ road and traveling on a low $\mu$ road). For this reason, a resonance frequency is also different between during traveling on a high $\mu$ road (hereinafter, also referred to as "during gripping") and during traveling on a low $\mu$ road (hereinafter, also referred to as "during slipping"). It also depends on the type of vehicle 1, but for example, when the vehicle 1 travels straight, the resonance frequency during gripping is approximately 6 Hz described above, while the resonance frequency during slipping is larger than this, for example, approximately 9 Hz. Similarly, when the vehicle 1 turns, the resonance frequency during slipping is a value different from that of the resonance frequency during gripping (approximately 2 Hz described above).

Consequently, in the present disclosure, as illustrated in Fig. 4, a road surface state value representing the road surface state of the vehicle 1 is applied to both the sum model and the difference model. The sum model outputs (derives) a sum mode instruction torque for suppressing the vibration of the left drive system and the vibration of the right drive system when the vehicle 1 travels straight in accordance with the applied road surface state value. Similarly, the difference model outputs (derives) a difference mode instruction torque for suppressing the vibration of the left drive system and the vibration of the right drive system during turning of the vehicle 1 in accordance with the applied road surface state value.

Step A1 in Fig. 4 corresponds to a process of calculating a sum equivalent value equivalent to the sum of a required left torque and a required right torque. The sum equivalent value calculated in this process is applied to the sum model in step A3 in Fig. 4. Step A5 in Fig. 4 corresponds to a process of calculating a road surface state value. The road surface state value calculated in this process is applied to the sum model in step A3 in Fig. 4. As a result, the output (sum mode instruction torque) for suppressing the vibration of the left drive system and the vibration of the right drive system when the vehicle 1 travels straight in consideration of a road surface state is acquired, and the vibration state of the vehicle 1 related to straight traveling is effectively suppressed.

Step A2 in Fig. 4 corresponds to a process of calculating a difference equivalent value equivalent to a difference between the required left torque and the required right torque. The difference equivalent value calculated in this process is applied to the difference model in step A4 in Fig. 4. Similarly to the sum model, the road surface state value calculated in step A5 is applied to the difference model. As a result, the output (difference mode instruction torque) for suppressing the vibration of the left drive system and the vibration of the right drive system when the vehicle 1 turns in consideration of a road surface state is acquired, and the vibration state of the vehicle 1 related to turning is effectively suppressed.

Next, a specific configuration for performing the above control will be described. Fig. 5 is a block diagram illustrating an example of logic of vibration suppression control performed by the vehicle control device 10. Fig. 6 is a block diagram illustrating another example of logic of vibration suppression control performed by the vehicle control device 10. Fig. 5 illustrates a case where a road surface state value is calculated by a first method to be described later, and Fig. 6 illustrates a case where a road surface state value is calculated by a second method to be described later.

The vibration suppression control is a control for obtaining a sum mode instruction torque and a difference mode instruction torque based on the sum model and the difference model. In addition, a plant in Figs. 5 and 6 is an object (shafts, gears, and the like included in the motor 2 and the power distribution mechanism 3) located on the upstream side of a power transmission path with respect to each axle 4.

As illustrated in Figs. 5 and 6, each of the vehicle control device 10 being one example and the vehicle control device 10 being another example is provided with a required left-right torque calculation unit 11, a traction control unit 12, a required sum difference torque calculation unit 13 (calculation unit), a state calculation unit 14, and a control unit 15. These elements are illustrated by classifying the functions of the vehicle control device 10 for convenience. These elements may be described as independent programs for implementing the functions of the respective elements. Alternatively, a plurality of elements may be combined and described as one composite program.

The required left-right torque calculation unit 11 calculates a required left torque and a required right torque. The required left-right torque calculation unit 11 calculates a required torque for the left drive system or the left motor 2L as a "required left torque" and calculates a required torque for the right drive system or the right motor 2R as a "required right torque" based on a driver operation (for example, an accelerator operation, a brake operation, a steering operation, and the like). A method for computing the required torques is not particularly limited, and the required torques may be calculated based on vehicle speed information or the like in addition to the driver operation described above.

The required left torque is, for example, a required torque $T_{Lds-ref}$ (hereinafter, referred to as a "required left axle torque $T_{Lds-ref}$") of the left axle 4L. The required right torque is, for example, a required torque $T_{Rds-ref}$ (hereinafter, referred to as a "required right axle torque $T_{Rds-ref}$") of the right axle 4R. In the present example, a case where the required axle torques $T_{Lds-ref}$ and $T_{Rds-ref}$ are used as a required left torque and a required right torque will be exemplified.

The traction control unit 12 performs traction control for reducing the required left torque and the required right torque calculated by the required left-right torque calculation unit 11 when slipping of the vehicle 1 is detected. A reduction amount in the required left torque and the required right torque reduced by the traction control may be a constant, and may be a variable that is set based on, for example, the required left torque, the required right torque, vehicle speed information, and the like. When the traction control unit 12 cooperates with a braking system (not illustrated) of the vehicle 1 to suppress the slipping of the vehicle 1 (performs traction control), the reduction amount may be set in consideration of a braking force applied to the left and right wheels 5. The required left torque and the required right torque reduced by the traction control unit 12 are transmitted to the required sum difference torque calculation unit 13. When the slipping of the vehicle 1 is not detected, the traction control unit 12 transmits the value transmitted from the required left-right torque calculation unit 11 to the required sum difference torque calculation unit 13 as it is.

As illustrated in Fig. 6, the traction control unit 12 may be provided with a control flag X for identifying the execution state of the traction control. The control flag X is transmitted to the state calculation unit 14 when a road surface state value is calculated by a second method to be described later. The initial value of the control flag X is set to 0, and the control flag X is set to 1 during the traction control. That is, when the value of the control flag X is 0, it indicates that the execution state of the traction control is "not being executed", and when the value is 1, it indicates that the execution state is "being executed".

Known control conditions can be applied to a start condition and an end condition of the traction control. For example, when a difference between an actual wheel speed and a target wheel speed becomes a predetermined difference or more, it is determined that the wheels have started slipping, and the traction control is started and the control flag X is set to 1. For example, when the difference between the actual wheel speed and the target wheel speed becomes less than the predetermined difference, it is determined that the slipping has ended, and the traction control ends and the control flag X is set to 0. The start and end of the traction control may be determined based on not only the difference between the actual wheel speed and the target wheel speed, but also an actual slip ratio $\lambda_R$ to be described later, an angular acceleration of the motor 2, which is calculated from the angular velocity of the motor 2, which is detected by the resolver 24, or an angular acceleration of the axle 4 which is calculated from the angular velocity of the axle 4, which is detected by the wheel speed sensor 25.

The required sum difference torque calculation unit 13 calculates a sum equivalent value and a difference equivalent value. The required sum difference torque calculation unit 13 calculates a sum equivalent value and a difference equivalent value based on the required left torque and the required right torque corresponding thereto. As illustrated in Figs. 5 and 6, the required sum difference torque calculation unit 13 of the present example calculates the sum equivalent value and the difference equivalent value based on the required left torque and the required right torque transmitted from the traction control unit 12.

In the present example, a case where the required sum mode torque $T_{Sds-ref}$ is obtained as the sum equivalent value and the required difference mode torque $T_{Dds-ref}$ is obtained as the difference equivalent value will be exemplified. Hereinafter, a calculation formula in a case where half of a sum of the required left axle torque $T_{Lds-ref}$ and the required right axle torque $T_{Rds-ref}$ is set as a sum equivalent value and half of a difference between the required left axle torque $T_{Lds-ref}$ and the required right axle torque $T_{Rds-ref}$ is set as a difference equivalent value will be described.

[Math. 1]

$$\begin{pmatrix} T_{Sds-ref} \\ T_{Dds-ref} \end{pmatrix} = \begin{pmatrix} \dfrac{1}{2} & \dfrac{1}{2} \\ \dfrac{1}{2} & -\dfrac{1}{2} \end{pmatrix} \begin{pmatrix} T_{Rds-ref} \\ T_{Lds-ref} \end{pmatrix}$$

$$\begin{pmatrix} \omega_{SL-ref} \\ \omega_{DL-ref} \end{pmatrix} = \begin{pmatrix} \dfrac{1}{2} & \dfrac{1}{2} \\ \dfrac{1}{2} & -\dfrac{1}{2} \end{pmatrix} \begin{pmatrix} \omega_{RL-ref} \\ \omega_{LL-ref} \end{pmatrix}$$

The state calculation unit 14 calculates a road surface state value representing the road surface state of the vehicle 1 (ascertains the road surface state of the vehicle 1). The state calculation unit 14 of the present example calculates a slip ratio λ as the road surface state value. The road surface state value is calculated by, for example, one of the following two methods.

First method: a method for calculating the road surface state value from actual slip ratios $\lambda_R$ of the left wheel 5L and the right wheel 5R

Second method: a method for calculating the road surface state value based on the execution state of the traction control

(A) First method

The first method is a method for calculating the slip ratio λ as a road surface state value from the actual slip ratios $\lambda_R$ of the left wheel 5L and the right wheel 5R. In the first method, for example, actual slip ratios $\lambda_{LR}$ and $\lambda_{RR}$ of the left and right wheels 5 are fed back to the state calculation unit 14. The state calculation unit 14 calculates a sum mode actual slip ratio $\lambda_{SR}$ equivalent to the sum of the actual slip ratios $\lambda_{LR}$ and $\lambda_{RR}$ of the left and right wheels 5 and a difference mode actual slip ratio $\lambda_{DR}$ equivalent to a difference between the actual slip ratios $\lambda_{LR}$ and $\lambda_{RR}$ of the left and right wheels 5. Then, the calculated sum mode actual slip ratio $\lambda_{SR}$ is applied to the sum model, and the calculated difference mode actual slip ratio $\lambda_{DR}$ is applied to the difference model. That is, in the first method, the state calculation unit 14 calculates the sum mode actual slip ratio $\lambda_{SR}$ and the difference mode actual slip ratio $\lambda_{DR}$ as the actual slip ratios $\lambda_R$ by using the actual slip ratio $\lambda_R$ as the slip ratio λ.

Here, when a yaw rate during turning of the vehicle 1 is γ, a tread is d, a right wheel reference wheel speed is $V_{rrx}$, and a left wheel reference wheel speed is $V_{rlx}$, the right wheel actual slip ratio $\lambda_{RR}$ and the left wheel actual slip ratio $\lambda_{LR}$ are calculated by, for example, the following equations. $V_{RR}$ is the actual wheel speed of the right wheel, and is obtained as, for example, a product of an angular velocity $\omega_{RL}$ of the right wheel 5R and radiuses r of the left and right wheels 5. $V_{LR}$ is the actual wheel speed of the left wheel, and is obtained as, for example, a product of an angular velocity $\omega_{LL}$ of the left wheel 5L and the radiuses r of the left and right wheels 5. $V_x$ is a vehicle body speed. In the calculation of the right wheel actual slip ratio $\lambda_{RR}$ and the left wheel actual slip ratio $\lambda_{LR}$, the angular velocities $\omega_{LM}$ and $\omega_{RM}$ of the motor 2 (the angular velocity of the motor 2 detected by the resolver 24) may be used instead of or in addition to the angular velocities $\omega_{LL}$ and $\omega_{RL}$ of the left and right wheels 5.

[Math. 2]

Right wheel reference wheel speed

$$V_{rrx} = V_x + \frac{d}{2}\gamma$$

Left wheel reference wheel speed

$$V_{rlx} = V_x - \frac{d}{2}\gamma$$

Right wheel actual slip ratio $\lambda_{RR}$

$$\lambda_{RR} = \left| \frac{V_{RR} - V_{rrx}}{V_{rrx}} \right|$$

Left wheel actual slip ratio $\lambda_{LR}$

$$\lambda_{LR} = \left| \frac{V_{LR} - V_{rlx}}{V_{rlx}} \right|$$

The state calculation unit 14 calculates a sum mode actual slip ratio $\lambda_{SR}$ equivalent to the sum of the actual slip ratios $\lambda_{LR}$ and $\lambda_{RR}$ of the left and right wheels 5 and a difference mode actual slip ratio $\lambda_{DR}$ equivalent to a difference between the actual slip ratios $\lambda_{LR}$ and $\lambda_{RR}$ of the left and right wheels 5. Hereinafter, a calculation formula in a case where half of a sum of the left wheel actual slip ratio $\lambda_{LR}$ and the right wheel actual slip ratio $\lambda_{RR}$ is set as the sum mode actual slip ratio $\lambda_{SR}$, and half of a difference between the left wheel actual slip ratio $\lambda_{LR}$ and the right wheel actual slip ratio $\lambda_{RR}$ is set as the difference mode actual slip ratio $\lambda_{DR}$ will be described.

[Math. 3]

$$\begin{pmatrix} \lambda_{SR} \\ \lambda_{DR} \end{pmatrix} = \begin{pmatrix} \dfrac{1}{2} & \dfrac{1}{2} \\ \dfrac{1}{2} & -\dfrac{1}{2} \end{pmatrix} \begin{pmatrix} \lambda_{RR} \\ \lambda_{LR} \end{pmatrix}$$

(B) Second method

The second method is a method for calculating a slip ratio $\lambda$ as a road surface state value based on the execution state of the traction control. The state calculation unit 14 of the present example ascertains the execution state of the traction control by using the control flag X of the traction control unit 12, and sets (calculates) the slip ratio $\lambda$ in synchronization with the control flag X. Specifically, the state calculation unit 14 sets the slip ratio $\lambda$ to 0 (slip ratio: 0%) when the control flag X transmitted from the traction control unit 12 is 0 (that is, when the control flag X indicates "not being executed"). When the control flag X is 1 (that is, when the control flag X indicates "being executed"), the state calculation unit 14 sets the slip ratio $\lambda$ to 1 (slip ratio: 100%). In the second method, the slip ratio $\lambda$ is switched to 0 or 1 in this manner. The state calculation unit 14 applies the set slip ratio $\lambda$ to each of the sum model and the difference model.

The control unit 15 controls the outputs of the left motor 2L and the right motor 2R using the sum mode instruction torque obtained by applying the sum equivalent value to the sum model and the difference mode instruction torque obtained by applying the difference equivalent value to the difference model. As illustrated in Figs. 5 and 6, the control unit 15 is provided with a sum mode control unit 16, a difference mode control unit 17, and a left-right conversion unit 18. The sum mode control unit 16 prepares (stores) a sum model that is a model (particularly related to vibration suppression) that models the motion states of the left drive system and the right drive system when the vehicle 1 travels straight. The difference mode control unit 17 prepares (stores) a difference model that is a model (particularly related to vibration suppression) that models the motion states of the left drive system and the right drive system when the vehicle 1 turns. Here, before describing the sum model and the difference model, schematic structures of the left drive system and the right drive system of the vehicle 1 will be described.

Fig. 7 is a schematic diagram schematically illustrating structures of a left drive system and a right drive system of the vehicle 1. Each of the left axle 4L and the right axle 4R can correspond to a structure in which a spring (axle rigidity $K_s$) and a damper (axle viscosity $D_s$) are connected in parallel. In Fig. 7, $J_{LM}$ is an inertia moment on the power distribution mechanism 3 side (driving side) with respect to the left axle 4L, $J_{Lw}$ is an inertia moment on the left wheel 5L side (load side) with respect to the left axle 4L, $J_{RM}$ is an inertia moment on the power distribution mechanism 3 side (driving side) with respect to the right axle 4R, and $J_{Rw}$ is an inertia moment on the right wheel 5R side (load side) with respect to the right axle 4R. Fig. 7 also illustrates a differential value (left driving side angular acceleration) of a left driving side angular velocity $\omega_{Lds}$, a differential value (left wheel angular acceleration) of a left wheel angular velocity $\omega_{LL}$, a differential value (right driving side angular acceleration) of a right driving side angular velocity $\omega_{Rds}$, and a differential value (right wheel angular acceleration) of a right wheel angular velocity $\omega_{RL}$.

Based on the above schematic diagram, the configuration of the sum model is modeled as a configuration as illustrated in Fig. 8A, and the configuration of the difference model is modeled as a configuration as illustrated in Fig. 8B. The sum model is applied to vibration suppression control for the axle 4 and the left and right wheels 5 related to straight traveling of the vehicle 1, and the difference model is applied to vibration suppression control for the axle 4 and the left and right wheels 5 related to turning of the vehicle 1.

In the present example, the sum model is provided with a characteristic that resonance hardly occurs during straight traveling (a characteristic that does not include a resonance frequency component during straight traveling), and the difference model is provided with a characteristic that resonance hardly occurs during turning (a characteristic that does not include a resonance frequency component during turning). Each of the sum model and the difference model is provided with a characteristic that resonance hardly occurs during gripping (a characteristic that does not include a resonance frequency component during gripping) and a characteristic that resonance hardly occurs during slipping (a characteristic that does not include a resonance frequency component during slipping). In this manner, a resonance frequency is controlled by being changed between the sum model and the difference model, and a resonance frequency is variably controlled depending on a road surface state value in each of the sum model and the difference model, thereby enabling vibration suppression in any traveling state and enabling vibration suppression in any road surface state. In the present example, both the sum model and the difference model are two-inertia system models, but each of the models may be configured as a multi-inertia system model including three or more inertia moments or spring dampers.

As illustrated in Fig. 8A, the sum model includes a driving side inertia moment $J_{SM}$, a spring damper designed with a rigidity $K_s$ and a viscosity $D_s$, and a load side inertia moment (sum mode wheel nominal inertia moment) $J_{SL}$. The driving side inertia moment $J_{SM}$ is calculated based on an inertia moment $J_M$ of a drive source (a left drive source and a right drive source), and for example, $J_{SM} = G^2J_M$. The load side inertia moment $J_{SL}$ is calculated based on a vehicle body weight M (converted to wheel terms) and a road surface state value. That is, in the sum model, the slip ratio $\lambda$ applied from the state calculation unit 14 is used to calculate the load side inertia moment $J_{SL}$. In other words, in the sum model, the value of the load side inertia moment $J_{SL}$ incorporated in the sum model changes depending on the slip ratio $\lambda$ (road surface state value).

A calculation formula for the load side inertia moment $J_{SL}$ will be described below. As illustrated in Fig. 5, when the state calculation unit 14 calculates the road surface state value by the first method, the sum mode actual slip ratio $\lambda_{SR}$ is substituted into the slip ratio $\lambda$ of the calculation formula. As illustrated in Fig. 6, when the state calculation unit 14 calculates the road surface state value by the second method, 1 or 0 is substituted into the slip ratio $\lambda$ in the calculation formula in accordance with the value of the control flag X.

[Math. 4]

$$J_{SL} = J_W + M(1 - \lambda)r^2$$

In addition to the driving side inertia moment $J_{SM}$ and the load side inertia moment $J_{SL}$, a driving side viscosity $D_{SM}$ and a load side viscosity $D_{SL}$ may also be considered. The driving side viscosity $D_{SM}$ is calculated based on viscosities $D_M$ of the drive sources (the left drive source and the right drive source), and for example, $D_{SM} = G^2D_M$. In Fig. 8A, $T_{Sin}$ is a sum mode driving side torque, $T_{Sds}$ is a sum mode axle torque, $T_{SL}$ is a sum mode wheel load side torque, and $\omega_{Sds}$ is a sum mode driving side angular velocity. The sum model may be represented by a relational expression including a transfer function representing input and output characteristics of the two-inertia system. Equations of motion related to the sum model are shown below.

[Math. 5]

Equation of motion of driving side

$$J_{SM}\dot{\omega}_{Sds} = T_{Sin} - T_{Sds}$$

Equation of motion of load side

$$J_{SL}\dot{\omega}_{SL} = T_{Sds} - T_{SL}$$

Equation of motion of spring damper system

$$T_{Sds} = K_S \int (\omega_{Sds} - \omega_{SL}) + D_S(\omega_{Sds} - \omega_{SL})$$

As illustrated in Fig. 8B, the difference model includes a driving side inertia moment $J_{DM}$ which is an equivalent inertia moment when a left-right difference occurs (during turning), a spring damper designed with a rigidity $K_s$ and a viscosity $D_s$, and a load side inertia moment (difference mode wheel nominal inertia moment) $J_{DL}$. The driving side inertia moment $J_{DM}$ is calculated based on the inertia moment $J_M$ of the drive sources (the left drive source and the right drive source) and the torque difference amplification factors ($b_1$, $b_2$, and the like) of the power distribution mechanism 3, and for example, $J_{DM} = (2b_1 + 1)^2G^2J_M$. The load side inertia moment $J_{DL}$ is calculated based on a yaw inertia moment $I_z$ (converted to wheel terms) of the vehicle 1 and a road surface state value. That is, similarly to the sum model, in the difference model, the slip ratio $\lambda$ applied from the state calculation unit 14 is used to calculate the load side inertia moment $J_{DL}$. In other words, in the difference model, the value of the load side inertia moment $J_{DL}$ incorporated in the difference model changes depending on the slip ratio $\lambda$ (road surface state value).

A calculation formula for the load side inertia moment $J_{DL}$ will be described below. As illustrated in Fig. 5, when the state calculation unit 14 calculates the road surface state value by the first method, the difference mode actual slip ratio $\lambda_{DR}$ is substituted into the slip ratio $\lambda$ of the calculation formula. As illustrated in Fig. 6, when the state calculation unit 14 calculates the road surface state value by the second method, 1 or 0 is substituted into the slip ratio $\lambda$ in the calculation formula in accordance with the value of the control flag X.

[Math. 6]

$$J_{DL} = J_W + \frac{r^2 I_z(1 - \lambda)}{2 * (d/2)^2}$$

In addition to the driving side inertia moment $J_{DM}$ and the load side inertia moment $J_{DL}$, a driving side viscosity $D_{DM}$ and a load side viscosity $D_{DL}$ may also be considered. The driving side viscosity $D_{DM}$ is calculated based on the viscosities $D_M$ of the drive sources (the left drive source and the right drive source) and torque difference amplification factors ($b_1$, $b_2$, and the like), and for example, $D_{DM} = (2b_1 + 1)^2 G^2 D_M$. In Fig. 8B, $T_{Din}$ is a difference mode driving side torque, $T_{Dds}$ is a difference mode axle torque, $T_{DL}$ is a difference mode wheel load side torque, and $\omega_{Dds}$ is a difference mode driving side angular velocity. The difference model may also be represented by a relational expression including a transfer function representing input and output characteristics of the two-inertia system. Equations of motion related to the difference model are shown below.

[Math. 7]

Equation of motion of driving side

$$J_{DM} \dot{\omega}_{Dds} = T_{Din} - T_{Dds}$$

Equation of motion of load side

$$J_{DL} \dot{\omega}_{DL} = T_{Dds} - T_{DL}$$

Equation of motion of spring damper system

$$T_{Dds} = K_S \int (\omega_{Dds} - \omega_{DL}) + D_S (\omega_{Dds} - \omega_{DL})$$

The sum mode control unit 16 applies the sum equivalent value calculated by the required sum difference torque calculation unit 13 to the sum model to acquire a sum mode instruction torque for suppressing the vibration of the left drive system and the vibration of the right drive system when the vehicle 1 travels straight. Here, a sum mode driving side torque $T_{Sin}$ is given as a specific example of the sum mode instruction torque. As illustrated in Figs. 5 and 6, the required sum mode torque $T_{Sds-ref}$ (sum equivalent value) calculated based on the left and required right axle torques $T_{Lds-ref}$ and $T_{Rds-ref}$ (required left and right torques) is applied to the sum model, and as a result, the sum mode instruction torque $T_{Sin}$ is acquired.

Similarly, the difference mode control unit 17 applies the difference equivalent value calculated by the required sum difference torque calculation unit 13 to the difference model to acquire a difference mode instruction torque for suppressing the vibration of the left drive system and the vibration of the right drive system during the turning of the vehicle 1. Here, a difference mode driving side torque $T_{Din}$ is given as a specific example of the difference mode instruction torque. As illustrated in Figs. 5 and 6, the required difference mode torque $T_{Dds-ref}$ (difference equivalent value) calculated based on the left and required right axle torques $T_{Lds-ref}$ and $T_{Rds-ref}$ (required left and right torques) is applied to the difference model, and as a result, the difference mode instruction torque $T_{Din}$ is acquired.

The left-right conversion unit 18 controls the outputs of the left motor 2L and the right motor 2R using the acquired sum mode instruction torque and difference mode instruction torque. Specifically, the left-right conversion unit 18 calculates a torque to be output from each of a pair of motors 2 as a left motor instruction torque $T_{LM}$ and a right motor instruction torque $T_{RM}$ based on the sum mode instruction torque $T_{Sin}$ and the difference mode instruction torque $T_{Din}$, and drives a pair of inverters 6 so as to obtain the torques. The left-right conversion unit 18 outputs half of a value, which is obtained by subtracting the difference mode instruction torque $T_{Din}$ from the sum mode instruction torque $T_{Sin}$, as the left motor instruction torque $T_{LM}$, and outputs half of a sum of the sum mode instruction torque $T_{Sin}$ and the difference mode instruction torque $T_{Din}$ as the right motor instruction torque $T_{RM}$, for example, in accordance with the calculation method used by the required sum difference torque calculation unit 13.

Thereby, the actual left and right axle torques accurately follow the required axle torques $T_{Lds-ref}$ and $T_{Rds-ref}$, the controllability of the axle torque (driving torque) is improved, and the vibration of the axle 4 (eventually, the vibration of the vehicle 1) is effectively suppressed. Since the sum model and the difference model are provided independently, it is easy to apply different characteristics (different vibration characteristics during straight traveling and during turning, and different vibration characteristics depending on a road surface state each of during straight traveling and during turning) to the sum mode instruction torque $T_{Sin}$ and the difference mode instruction torque $T_{Din}$.

The sum model of the present example includes a transfer function represented by a ratio of the sum mode driving side torque $T_{Sin}$ used for the vibration suppression control of the motor 2 to the sum equivalent value. Similarly, the difference model of the present example includes a transfer function represented by a ratio of the difference mode driving side torque $T_{Din}$ used for the vibration suppression control of the motor 2 to the difference equivalent value. With such a transfer function, it is possible to compute an instruction torque that is a required output. Hereinafter, an example of transfer functions of the sum model and the difference model that can be set in the vehicle 1 including the power distribution mechanism 3 will be described.

3. Specific Examples of Sum Model and Difference Model

Regarding the derivation of the sum model and the difference model described above, the power distribution mechanism 3 may be expressed as follows using vector representation.

[Math. 8]

Matrix of various gear ratios

$$G = \begin{pmatrix} G & 0 \\ 0 & G \end{pmatrix}, B = \begin{pmatrix} b_2 + 1 & -b_2 \\ -b_1 & b_1 + 1 \end{pmatrix}$$

Angular velocity vector

$$\omega_L = \begin{pmatrix} \omega_{RL} \\ \omega_{LL} \end{pmatrix}, \omega_{ds} = \begin{pmatrix} \omega_{Rds} \\ \omega_{Lds} \end{pmatrix}, \omega_M = GB\omega_{ds} = \begin{pmatrix} \omega_{RM} \\ \omega_{LM} \end{pmatrix}$$

Torque vector

$$T_{ds} = \begin{pmatrix} T_{Rds} \\ T_{Lds} \end{pmatrix}, T_M = \begin{pmatrix} T_{RM} \\ T_{LM} \end{pmatrix}, T_L = \begin{pmatrix} T_{RL} \\ T_{LL} \end{pmatrix}, T_{in} = B^T G T_M = \begin{pmatrix} T_{Rin} \\ T_{Lin} \end{pmatrix}$$

Dynamics of left and right wheels 5 (load side), driving side, and axle 4

$$P_L = \begin{pmatrix} \dfrac{1}{J_{SL}s + D_{SL}} & 0 \\ 0 & \dfrac{1}{J_{DL}s + D_{DL}} \end{pmatrix}, P_M = \begin{pmatrix} \dfrac{1}{J_M s + D_M} & 0 \\ 0 & \dfrac{1}{J_M s + D_M} \end{pmatrix}$$

$$P_{DS} = \begin{pmatrix} D_s + \dfrac{K_s}{s} & 0 \\ 0 & D_s + \dfrac{K_s}{s} \end{pmatrix}$$

When equations of motion (sum and difference) on the driving side are expressed for the left and right sides respectively using the above equations, the following equations are obtained. In the equation, $Z_{11}$ is a speed reduction ratio from a left drive source (left motor 2L) to a left axis (left axle 4L), $Z_{22}$ is a speed reduction ratio from a right drive source (right motor 2R) to a right axis (right axle 4R), and $Z_c$ is a speed reduction ratio from the left and right drive sources to the axes on the opposite sides.

[Math. 9]

$$\begin{pmatrix} \omega_{Rds} \\ \omega_{Lds} \end{pmatrix} = \frac{G^{-2}P_M}{|Z|} \begin{pmatrix} Z_{22} & -Z_c \\ -Z_c & Z_{11} \end{pmatrix} \begin{pmatrix} T_{Rin} - T_{Rds} \\ T_{Lin} - T_{Lds} \end{pmatrix}$$

$$Z^{-1} = B^{-1}{}^T B^{-1} = \frac{1}{|Z|} \begin{pmatrix} Z_{22} & -Z_c \\ -Z_c & Z_{11} \end{pmatrix}$$

$$= \frac{1}{(1 + b_1 + b_2)^2} \begin{pmatrix} b_1^2 + 2b_1 + b_2^2 + 1 & b_1^2 + b_1 + b_2^2 + b_2 \\ b_1^2 + b_1 + b_2^2 + b_2 & b_2^2 + 2b_2 + b_1^2 + 1 \end{pmatrix}$$

$$Z_{11} = b_2^2 + 2b_2 + b_1^2 + 1$$

$$Z_{22} = b_1^2 + 2b_1 + b_2^2 + 1$$

$$Z_c = -(b_1^2 + b_1 + b_2^2 + b_2)$$

When matrices for conversion into the sum and difference modes are applied to both sides of the above equation, the following equations are obtained.

[Math. 10]

$$\begin{pmatrix} \frac{1}{2} & \frac{1}{2} \\ \frac{1}{2} & -\frac{1}{2} \end{pmatrix} \begin{pmatrix} \omega_{Rds} \\ \omega_{Lds} \end{pmatrix} = \frac{G^{-2}P_M}{|Z|} \begin{pmatrix} \frac{1}{2} & \frac{1}{2} \\ \frac{1}{2} & -\frac{1}{2} \end{pmatrix} \begin{pmatrix} Z_{22} & -Z_c \\ -Z_c & Z_{11} \end{pmatrix} \begin{pmatrix} T_{Rin} - T_{Rds} \\ T_{Lin} - T_{Lds} \end{pmatrix}$$

$$= \frac{G^{-2}P_M}{2|Z|} \begin{pmatrix} Z_{22} - Z_c & Z_{11} - Z_c \\ Z_{22} + Z_c & -(Z_{11} + Z_c) \end{pmatrix} \begin{pmatrix} T_{Rin} - T_{Rds} \\ T_{Lin} - T_{Lds} \end{pmatrix}$$

Here, when $b_1 = b_2 = b$, it means that $Z_{11} - Z_c = Z_{22} - Z_c = |Z|$, $Z_{11} + Z_c = Z_{22} + Z_c = 1$, and thus the equation can be deformed as shown below, and equations of motion of the motor 2 corresponding to the sum and difference modes can be obtained. In this manner, the equation of motion on the driving side is decomposed into each of the sum and difference modes, both are decoupled.

[Math. 11]

$$\begin{pmatrix} \frac{1}{2} & \frac{1}{2} \\ \frac{1}{2} & -\frac{1}{2} \end{pmatrix} \begin{pmatrix} \omega_{Rds} \\ \omega_{Lds} \end{pmatrix} = \frac{G^{-2}P_M}{2|Z|} \begin{pmatrix} |Z| & |Z| \\ 1 & -1 \end{pmatrix} \begin{pmatrix} T_{Rin} - T_{Rds} \\ T_{Lin} - T_{Lds} \end{pmatrix}$$

$$= \frac{P_M}{G^2} \begin{pmatrix} 1 & 0 \\ 0 & \frac{1}{|Z|} \end{pmatrix} \begin{pmatrix} \frac{1}{2} & \frac{1}{2} \\ \frac{1}{2} & -\frac{1}{2} \end{pmatrix} \begin{pmatrix} T_{Rin} - T_{Rds} \\ T_{Lin} - T_{Lds} \end{pmatrix}$$

Equation of motion of driving side

$$\begin{pmatrix} \omega_{Sds} \\ \omega_{Dds} \end{pmatrix} = \frac{P_M}{G^2} \begin{pmatrix} 1 & 0 \\ 0 & \frac{1}{|Z|} \end{pmatrix} \begin{pmatrix} T_{Sin} - T_{Sds} \\ T_{Din} - T_{Dds} \end{pmatrix}$$

Similarly to the derivation of the equation of motion on the driving side, equations of motion for the left and right wheels 5 (load side) and the axle 4 may be expressed as follows.

[Math. 12]

Equation of motion of left and right wheels 5 (load side)

$$\begin{pmatrix} \omega_{RL} \\ \omega_{LL} \end{pmatrix} = P_L \begin{pmatrix} T_{Rds} - T_{RL} \\ T_{Lds} - T_{LL} \end{pmatrix}$$

$$\begin{pmatrix} \dfrac{1}{2} & \dfrac{1}{2} \\ \dfrac{1}{2} & -\dfrac{1}{2} \end{pmatrix} \begin{pmatrix} \omega_{RL} \\ \omega_{LL} \end{pmatrix} = P_L \begin{pmatrix} \dfrac{1}{2} & \dfrac{1}{2} \\ \dfrac{1}{2} & -\dfrac{1}{2} \end{pmatrix} \begin{pmatrix} T_{Rds} - T_{RL} \\ T_{Lds} - T_{LL} \end{pmatrix}$$

$$\begin{pmatrix} \omega_{SL} \\ \omega_{DL} \end{pmatrix} = P_L \begin{pmatrix} T_{Sds} - T_{SL} \\ T_{Dds} - T_{DL} \end{pmatrix}$$

Equation of motion of axle 4

$$\begin{pmatrix} T_{Rds} \\ T_{Lds} \end{pmatrix} = P_{DS} \begin{pmatrix} \omega_{Rds} - \omega_{RL} \\ \omega_{Lds} - \omega_{LL} \end{pmatrix}$$

$$\begin{pmatrix} \dfrac{1}{2} & \dfrac{1}{2} \\ \dfrac{1}{2} & -\dfrac{1}{2} \end{pmatrix} \begin{pmatrix} T_{Rds} \\ T_{Lds} \end{pmatrix} = P_{DS} \begin{pmatrix} \dfrac{1}{2} & \dfrac{1}{2} \\ \dfrac{1}{2} & -\dfrac{1}{2} \end{pmatrix} \begin{pmatrix} \omega_{Rds} - \omega_{RL} \\ \omega_{Lds} - \omega_{LL} \end{pmatrix}$$

$$\begin{pmatrix} T_{Sds} \\ T_{Dds} \end{pmatrix} = P_{DS} \begin{pmatrix} \omega_{Sds} - \omega_{SL} \\ \omega_{Dds} - \omega_{DL} \end{pmatrix}$$

Here, since the dynamics of the left and right wheels 5 (load side) is expressed by $P_L$ in the above Math. 8, the equation of motion for the left and right wheels 5 (load side) in the above Math. 12 is rewritten as follows.

[Math. 13]

$$\begin{pmatrix} \omega_{SL} \\ \omega_{DL} \end{pmatrix} = P_L \begin{pmatrix} T_{Sds} - T_{SL} \\ T_{Dds} - T_{DL} \end{pmatrix} = \begin{pmatrix} \dfrac{1}{J_{SL}s + D_{SL}} & 0 \\ 0 & \dfrac{1}{J_{DL}s + D_{DL}} \end{pmatrix} \begin{pmatrix} T_{Sds} - T_{SL} \\ T_{Dds} - T_{DL} \end{pmatrix}$$

In a step of applying the sum equivalent value to the sum model (that is, the processing of the sum mode control unit 16) and a step of applying the difference equivalent value to the difference model (that is, the processing of the difference mode control unit 17), when disturbance is not considered, the sum mode wheel load side torque $T_{SL} = 0$ and the difference mode wheel load side torque $T_{DL} = 0$, and the following Math. 14 is obtained.

[Math. 14]

$$\begin{pmatrix} \omega_{SL} \\ \omega_{DL} \end{pmatrix} = \begin{pmatrix} \dfrac{1}{J_{SL}s + D_{SL}} & 0 \\ 0 & \dfrac{1}{J_{DL}s + D_{DL}} \end{pmatrix} \begin{pmatrix} T_{Sds} \\ T_{Dds} \end{pmatrix}$$

Here, since the dynamics on the driving side is expressed by $P_M$ in the above Math. 8, the equation of motion for the driving side in the above Math. 11 is rewritten as follows.

[Math. 15]

$$\begin{pmatrix} \omega_{Sds} \\ \omega_{Dds} \end{pmatrix} = \frac{P_M}{G^2} \begin{pmatrix} 1 & 0 \\ 0 & \frac{1}{(2b+1)^2} \end{pmatrix} \begin{pmatrix} T_{Sin} - T_{Sds} \\ T_{Din} - T_{Dds} \end{pmatrix}$$

$$= \frac{1}{G^2} \left( \frac{1}{J_M s + D_M} \right) \begin{pmatrix} 1 & 0 \\ 0 & \frac{1}{(2b+1)^2} \end{pmatrix} \begin{pmatrix} T_{Sin} - T_{Sds} \\ T_{Din} - T_{Dds} \end{pmatrix}$$

Further, since the dynamics of the axle 4 is expressed by $P_{DS}$ in the above Math. 8, the equation of motion for the axle 4 in the above Math. 12 is rewritten as follows.

[Math. 16]

$$\begin{pmatrix} T_{Sds} \\ T_{Dds} \end{pmatrix} = P_{DS} \begin{pmatrix} \omega_{Sds} - \omega_{SL} \\ \omega_{Dds} - \omega_{DL} \end{pmatrix} = \left( D_S + \frac{K_S}{s} \right) \begin{pmatrix} \omega_{Sds} - \omega_{SL} \\ \omega_{Dds} - \omega_{DL} \end{pmatrix}$$

When Math. 14 and Math. 15 are substituted into $\omega_{Sds}$, $\omega_{Dds}$, $\omega_{SL}$, and $\omega_{DL}$ in the above Math. 16 and the equation is arranged using $J_{SM} = G^2 J_M$, $D_{SM} = G^2 D_M$, $J_{DM} = (2b_1 + 1)^2 G^2 J_M$, and $D_{DM} = (2b_1 + 1)^2 G^2 D_M$, the following equation is obtained. Thereby, the sum mode axle torque $T_{Sds}$ and the difference mode axle torque $T_{Dds}$ when the sum mode driving side torque $T_{Sin}$ and the difference mode driving side torque $T_{Din}$ are applied to the axle 4 are obtained.

[Math. 17]

$$\begin{pmatrix} T_{Sds}/T_{Sin} \\ T_{Dds}/T_{Din} \end{pmatrix} =$$

$$\begin{pmatrix} \dfrac{J_{SL}D_S s^2 + (D_{SL}D_S + J_{SL}K_S)s + D_{SL}K_S}{J_{SM}J_{SL}s^3 + \{J_{SM}(D_{SL}+D_S)+J_{SL}(D_{SM}+D_S)\}s^2 + \{D_{SM}D_{SL}+D_{SM}D_S+D_{SL}D_S+K_S(J_{SM}+J_{SL})\}s + K_S(D_{SM}+D_{SL})} \\ \dfrac{J_{DL}D_S s^2 + (D_{DL}D_S + J_{DL}K_S)s + D_{DL}K_S}{J_{DM}J_{DL}s^3 + \{J_{DM}(D_{DL}+D_S)+J_{DL}(D_{DM}+D_S)\}s^2 + \{D_{DM}D_{DL}+D_{DM}D_S+D_{DL}D_S+K_S(J_{DM}+J_{DL})\}s + K_S(D_{DM}+D_{DL})} \end{pmatrix}$$

By taking the reciprocal of the transfer function in the above Math. 17, assuming the required torques, which are computed by, for example, an upper-level ECU, to be $T_{Sds-ref}$ and $T_{Dds-ref}$, and substituting these required torques $T_{Sds-ref}$ and $T_{Dds-ref}$ for the axle torques $T_{Sds}$ and $T_{Dds}$ in Math. 17, the following equation is obtained.

[Math. 18]

$$\begin{pmatrix} T_{Sin}/T_{Sds-ref} \\ T_{Din}/T_{Dds-ref} \end{pmatrix} =$$

$$\begin{pmatrix} \dfrac{J_{SM}J_{SL}s^3 + \{J_{SM}(D_{SL}+D_S)+J_{SL}(D_{SM}+D_S)\}s^2 + \{D_{SM}D_{SL}+D_{SM}D_S+D_{SL}D_S+K_S(J_{SM}+J_{SL})\}s + K_S(D_{SM}+D_{SL})}{J_{SL}D_S s^2 + (D_{SL}D_S + J_{SL}K_S)s + D_{SL}K_S} \\ \dfrac{J_{DM}J_{DL}s^3 + \{J_{DM}(D_{DL}+D_S)+J_{DL}(D_{DM}+D_S)\}s^2 + \{D_{DM}D_{DL}+D_{DM}D_S+D_{DL}D_S+K_S(J_{DM}+J_{DL})\}s + K_S(D_{DM}+D_{DL})}{J_{DL}D_S s^2 + (D_{DL}D_S + J_{DL}K_S)s + D_{DL}K_S} \end{pmatrix}$$

The transfer function in Math. 18 is not proper. Thus, when the transfer function is made to be proper using a second-order low-pass filter, the following equation is obtained. Thereby, it is possible to calculate torques (that is, the sum mode instruction torque $T_{Sin}$ and the difference mode instruction torque $T_{Din}$) to be applied to the motor 2 in order to obtain the axle torques $T_{Sds-ref}$ and $T_{Dds-ref}$ in the sum and difference modes as required. That is, the following Math. 19 is an example of a transfer function included in the sum model and the difference model.

[Math. 19]

$$\begin{pmatrix} T_{Sin}/T_{Sds-ref} \\ T_{Din}/T_{Dds-ref} \end{pmatrix} =$$

$$\begin{pmatrix} \dfrac{J_{SM}J_{SL}s^3+\{J_{SM}(D_{SL}+D_S)+J_{SL}(D_{SM}+D_S)\}s^2+\{D_{SM}D_{SL}+D_{SM}D_S+D_{SL}D_S+K_S(J_{SM}+J_{SL})\}s+K_S(D_{SM}+D_{SL})}{J_{SL}D_Ss^2+(D_{SL}D_S+J_{SL}K_S)s+D_{SL}K_S} \\ \dfrac{J_{DM}J_{DLS}s^3+\{J_{DM}(D_{DL}+D_S)+J_{DL}(D_{DM}+D_S)\}s^2+\{D_{DM}D_{DL}+D_{DM}D_S+D_{DL}D_S+K_S(J_{DM}+J_{DL})\}s+K_S(D_{DM}+D_{DL})}{J_{DL}D_Ss^2+(D_{DL}D_S+J_{DL}K_S)s+D_{DL}K_S} \end{pmatrix}\dfrac{1}{(\tau s+1)^2}$$

When the parameters of the sum model and the difference model are decomposed in the derived transfer function formulas, it can be seen that there are a parameter (vehicle body weight M) shown only in the sum model and a parameter (yaw inertia moment $I_z$) shown only in the difference model as illustrated in Fig. 9. These parameters M and $I_z$ are parameters that do not interfere with each other in the sum model and the difference model, and are hereinafter referred to as "non-interference parameters".

In the vehicle control device 10 of the present example, the non-interference parameters M and $I_z$ are used as adjustment coefficients in an adaptation process for the vehicle 1. That is, in the sum model focusing on the straight traveling state (translational motion) of the vehicle 1, the turning state is not affected by adjusting and adapting the vehicle body weight M as the non-interference parameter. Similarly, in the difference model focusing on the turning state (yaw motion) of the vehicle 1, the straight traveling state is not affected by adjusting and adapting the yaw inertia moment $I_z$ as the non-interference parameter.

4. Effect

(1) The vehicle control device 10 described above includes the required sum difference torque calculation unit 13, the sum model, the difference model, the state calculation unit 14, and the control unit 15. The required sum difference torque calculation unit 13 calculates a sum equivalent value equivalent to a sum of a required left torque and a required right torque, and calculates a difference equivalent value equivalent to a difference between the required left torque and the required right torque. The sum model is a model obtained by modeling motion states of the left drive system and the right drive system when the vehicle 1 travels straight, and a sum equivalent value is applied thereto. The difference model is a model obtained by modeling motion states of the left drive system and the right drive system when the vehicle 1 turns, and a difference equivalent value is applied thereto.

The state calculation unit 14 calculates a road surface state value representing a road surface state of the vehicle 1, and applies the calculated road surface state value to each of the sum model and the difference model. Thereby, in the sum model, a load side inertia moment configuring a transfer function representing input and output characteristics of the two-inertia system thereof is calculated based on the applied road surface state value. Similarly in the difference model, a load side inertia moment configuring a transfer function representing input and output characteristics of the two-inertia system thereof is calculated based on the applied road surface state value.

The control unit 15 controls the left and right motors 2 using a sum mode instruction torque obtained by applying the sum equivalent value to the sum model and a difference mode instruction torque obtained by applying the difference equivalent value to the difference model. With such a configuration, vibrations of the left and right axles 4 can be suppressed without interfering with each other with respect to vibration characteristics different between during straight traveling and during turning, and the vibrations of the left and right axles 4 can be suppressed without interfering with each other with respect to vibration characteristics different depending on a road surface state (between during gripping and during slipping) in each traveling state. The sum model corresponding to a straight traveling state and the difference model corresponding to a turning state are separated and constructed as models independent of each other, and thus complicated non-interference control is unnecessary. Thus, design can be made simpler, and vibration suppression can be achieved with a simple configuration.

(2) When the state calculation unit 14 calculates a road surface state value from the actual slip ratios $\lambda_R$ of the left wheel 5L and the right wheel 5R, a load side inertia moment value configuring each of the sum model and the difference model varies depending on the values of the actual slip ratios $\lambda_R$. Thus, fine vibration suppression control can be achieved for vibration characteristics different depending on the road surface state.

(3) When the state calculation unit 14 calculates the road surface state value based on the execution state of traction control, the road surface state value is binarized. Thus, vibration suppression can be achieved with a simple configuration for vibration characteristics different depending on the road surface state.

In the above example, both the sum model and the difference model can be constructed with two-inertia system models. With such a configuration, it is possible to construct, with a simple configuration, a model regarding the motion states (in particular, vibration suppression) of the left and right drive systems when the vehicle 1 travels straight and turns. It is possible to perform control in consideration of viscoelasticity for vibration characteristics different between during straight traveling and during turning. Thus, controllability of the vehicle 1 can be improved, and a higher vibration suppression effect can be obtained.

As illustrated in Fig. 8A, the above-described sum model can be expressed by a transfer function representing input and output characteristics of a two-inertia system including a driving side inertia moment calculated based on the inertia moment of the left drive source and the inertia moment of the right drive source, a spring damper designed with rigidity and viscosity, and a load side inertia moment calculated based on a vehicle body weight and a road surface state value of the vehicle 1. Thereby, it is possible to effectively suppress vibration during straight traveling in consideration of viscoelasticity, and to improve controllability of the vehicle 1.

As illustrated in Fig. 8B, the above-described difference model can be expressed by a transfer function representing input and output characteristics of a two-inertia system including a driving side inertia moment that is an equivalent inertia moment at the time of occurrence of a left-right difference calculated based on a torque difference amplification factor, a spring damper designed with rigidity and viscosity, and a load side inertia moment calculated based on a yaw inertia moment and a road surface state value of the vehicle 1. Thereby, it is possible to effectively suppress vibration during turning in consideration of viscoelasticity, and to improve controllability of the vehicle 1.

In the above-described vehicle control device 10, since the non-interference parameters M and $I_z$ are used as adjustment coefficients in an adaptation process, it is possible to efficiently implement adaptation in a straight traveling state and adaptation in a turning state without interfering with each other.

5. Others

The foregoing example is merely exemplary and is not intended to exclude the application of various modifications and techniques which are not explicitly described in the present example. Each configuration according to the present example can be modified in various ways without departing from the gist of the present example. Each configuration according to the present example can be selected as necessary or can be combined as appropriate.

For example, in the above-described vehicle control device 10, when the control unit 15 controls the outputs of the left motor 2L and the right motor 2R, a driver request of the vehicle 1 or an acceleration state of the vehicle 1 may be considered. Examples of the driver request include a steering wheel angle and an accelerator operation. Examples of the acceleration state include a longitudinal acceleration (longitudinal G) and a lateral acceleration (lateral G). The control unit 15 may consider either one of the driver request and the acceleration state or both. For example, the control unit 15 can perform control in consideration of the parameters of the driver request (for example, the steering wheel angle) and the acceleration state (longitudinal G, lateral G) by including the parameters in the transfer function formulas included in the sum model and the difference model.

In the above example, a case where the required left axle torque $T_{Lds-ref}$ is used as a required left torque and the required right axle torque $T_{Rds-ref}$ is used as a required right torque has been exemplified. However, a required torque for the left motor 2L may be used as the required left torque, or a required torque for the right motor 2R may be used as the required right torque.

In the above example, a case where the required left torque and the required right torque are calculated by the required left-right torque calculation unit 11 has been exemplified. However, a required left torque and a required right torque may be calculated by calculation means different from the required left-right torque calculation unit 11, or may be calculated by an electronic control unit (for example, the upper-level ECU of the vehicle control device 10) different from the vehicle control device 10. When the required left torque and the required right torque are calculated by the electronic control unit different from the vehicle control device 10, the required left-right torque calculation unit 11 may be omitted.

In the above-described example, a case where the vehicle control device 10 includes the traction control unit 12 has been exemplified, but the vehicle control device 10 may omit the traction control unit 12. For example, when a road surface state value is calculated by the first method in the above-described example, the traction control unit 12 may be omitted.

In the above-described example, a case where the slip ratio $\lambda$ is calculated as the road surface state value has been exemplified, but a parameter calculated as the road surface state value is not limited thereto. The state calculation unit 14 may calculate, for example, a road surface friction, an angular acceleration of the motor 2, an angular acceleration of the axle 4, and the like as road surface state values, and may calculate values calculated based on two or more parameters among these parameters as the road surface state values.

In the above example, the vehicle 1 on which the pair of motors 2 is mounted as the drive source has been exemplified. However, an internal combustion engine may be applied instead of the motor 2, and a specific type of the drive source is irrelevant. Although the vehicle 1 including the vehicle drive device (DM-AYC device) including the pair of motors 2 and the power distribution mechanism 3 has been exemplified, the concepts of the sum model and the difference model are applicable to any vehicle, including, for example, vehicles that do not include the power distribution mechanism 3 and vehicles with in-wheel motors. As long as a vehicle includes at least a left drive system including a left axle and a left wheel to which power from a left drive source is transmitted, and a right drive system including a right axle and a right wheel to which power from a right drive source is transmitted, the same control as in the above example can be performed, and the same operations and effects as in the above example can be obtained.

[Industrial Applicability]

The present disclosure can be used in the manufacturing industry of a vehicle control device, and can also be used in the manufacturing industry of a vehicle on which a vehicle control device is mounted.

[Reference Signs List]

1 Vehicle
2 Motor (drive source)
3 Power distribution mechanism
4 Axle
5 Left and right wheels
6 Inverter
7 Battery
10 Vehicle control device
11 Required left-right torque calculation unit
12 Traction control unit
13 Required sum difference torque calculation unit (calculation unit)
14 State calculation unit
15 Control unit
16 Sum mode control unit
17 Difference mode control unit
18 Left-right conversion unit
21 Accelerator opening sensor
22 Brake sensor
23 Steering angle sensor
24 Resolver
25 Wheel speed sensor

**Claims**

1.  A vehicle control device that controls outputs of a left drive source and a right drive source in a vehicle including a left drive system including a left axle and a left wheel to which power from the left drive source is transmitted and a right drive system including a right axle and a right wheel to which power from the right drive source is transmitted, the vehicle control device comprising:

    a calculation unit that calculates a sum equivalent value equivalent to a sum of a required left torque, which is a required torque for the left drive system or the left drive source, and a required right torque, which is a required torque for the right drive system or the right drive source, and calculates a difference equivalent value equivalent to a difference between the required left torque and the required right torque;
    a state calculation unit that calculates a road surface state value representing a road surface state of the vehicle;
    a sum model that is obtained by modeling motion states of the left drive system and the right drive system during straight traveling of the vehicle and to which the sum equivalent value is applied;
    a difference model that is obtained by modeling motion states of the left drive system and the right drive system during turning of the vehicle and to which the difference equivalent value is applied; and
    a control unit that controls outputs of the left drive source and the right drive source by using a sum mode instruction torque obtained by applying the sum equivalent value to the sum model and a difference mode instruction torque obtained by applying the difference equivalent value to the difference model, wherein

both the sum model and the difference model are two-inertia system models,
the sum model includes a transfer function representing input and output characteristics of a two-inertia system including a driving side inertia moment calculated based on an inertia moment of the left drive source and an inertia moment of the right drive source, a spring damper designed with rigidity and viscosity, and a load side inertia moment calculated based on a vehicle body weight and the road surface state value of the vehicle, and the difference model includes a transfer function representing input and output characteristics of a two-inertia system including a driving side inertia moment which is an equivalent inertia moment when a left-right difference calculated based on a torque difference amplification factor occurs, a spring damper designed with rigidity and viscosity, and a load side inertia moment calculated based on a yaw inertia moment and the road surface state value of the vehicle.

2. The vehicle control device according to claim 1, wherein
the road surface state value is calculated from actual slip ratios of the left wheel and the right wheel.

3. The vehicle control device according to claim 1, further comprising a traction control unit that performs traction control for reducing the required left torque and the required right torque when slipping of the vehicle is detected, wherein the road surface state value is calculated based on an execution state of the traction control by the traction control unit.

4. A vehicle control method for controlling outputs of a left drive source and a right drive source in a vehicle including a left drive system including a left axle and a left wheel to which power from the left drive source is transmitted and a right drive system including a right axle and a right wheel to which power from the right drive source is transmitted, the vehicle control method comprising:

preparing in advance a sum model that is obtained by modeling motion states of the left drive system and the right drive system during straight traveling of the vehicle, and a difference model that is obtained by modeling motion states of the left drive system and the right drive system during turning of the vehicle, both the sum model and the difference model being two-inertia system models, the sum model including a transfer function representing input and output characteristics of a two-inertia system including a driving side inertia moment calculated based on an inertia moment of the left drive source and an inertia moment of the right drive source, a spring damper designed with rigidity and viscosity, and a load side inertia moment calculated based on a vehicle body weight of the vehicle and a road surface state value representing a road surface state of the vehicle, and the difference model including a transfer function representing input and output characteristics of a two-inertia system including a driving side inertia moment that is an equivalent inertia moment when a left-right difference calculated based on a torque difference amplification factor occurs, a spring damper designed with rigidity and viscosity, and a load side inertia moment calculated based on a yaw inertia moment and the road surface state value of the vehicle;
calculating a sum equivalent value equivalent to a sum of a required left torque, which is a required torque for the left drive system or the left drive source, and a required right torque, which is a required torque for the right drive system or the right drive source, and calculating a difference equivalent value equivalent to a difference between the required left torque and the required right torque;
acquiring a sum mode instruction torque by applying the sum equivalent value to the sum model and acquiring a difference mode instruction torque by applying the difference equivalent value to the difference model; and
controlling outputs of the left drive source and the right drive source by using the sum mode instruction torque and the difference mode instruction torque.

## FIG. 1

## FIG. 2

FIG. 3

FIG. 4

# Vehicle control device (ECU) 10

**State calculation unit** 14  15

$\lambda = \lambda_{DR}$   $\lambda = \lambda_{SR}$

## Control unit 15

11 Required left-right torque calculation unit

12 Traction control unit

13 Required sum difference torque calculation unit

16 Sum mode control unit 18

**Sum model** → $T_{Sin}$

17 Difference mode control unit

**Difference model** → $T_{Din}$

Left-right conversion unit 18

Plant

$T_{Rds-ref}$ ... $T_{Rds-ref}$ ... $T_{Sds-ref}$ ... $T_{Sin}$ ... $T_{RM}$

$T_{Lds-ref}$ ... $T_{Lds-ref}$ ... $T_{Dds-ref}$ ... $T_{Din}$ ... $T_{LM}$

$T_{Rds-ref}$ : Required right axle torque (required right torque)

$T_{Lds-ref}$ : Required left axle torque (required left torque)

$T_{Sds-ref}$ : Required sum mode torque (sum equivalent value)

$T_{Dds-ref}$ : Required difference mode torque (difference equivalent value)

$\lambda$ : Slip ratio

$T_{Sin}$ : Sum mode instruction torque

$T_{Din}$ : Difference mode instruction torque

$T_{RM}$ : Right motor instruction torque

$T_{LM}$ : Left motor instruction torque

$\lambda_{SR}$ : Sum mode actual slip ratio

$\lambda_{DR}$ : Difference mode actual slip ratio

FIG. 5

EP 4 763 583 A1

23

## FIG. 6

$T_{Rds-ref}$ : Required right axle torque (required right torque)

$T_{Lds-ref}$ : Required left axle torque (required left torque)

$T_{Sds-ref}$ : Required sum mode torque (sum equivalent value)

$T_{Dds-ref}$ : Required difference mode torque (difference equivalent value)

$X$ : Control flag

$T_{Sin}$ : Sum mode instruction torque

$T_{Din}$ : Difference mode instruction torque

$T_{RM}$ : Right motor instruction torque

$T_{LM}$ : Left motor instruction torque

$\lambda$ : Slip ratio

## FIG. 7

$\dot{\omega}_{LL}$   4L

$J_{Lw}$

$K_S$

5L   $\dot{\omega}_{Lds}$   3   $\dot{\omega}_{Rds}$   $K_S$   5R

$J_{LM}$   $J_{RM}$

$D_S$   Driving side   $D_S$

Load side   Load side

4R   $\dot{\omega}_{RL}$

$J_{Rw}$

## FIG. 8 A

Sum model (Two-inertia system model)

$\dot{\omega}_{Sds}$   $\dot{\omega}_{SL}$

$T_{Sds}$   $T_{Sds}$

$T_{Sin}$   $J_{SM}$   $J_{SL}$   $T_{SL}$

$D_{SM}$   $D_{SL}$

$K_S, D_S$

$$J_{SM} = G^2 \cdot J_M, \quad D_{SM} = G^2 \cdot D_M$$

## FIG. 8 B

Difference model (Two-inertia system model)

$\dot{\omega}_{Dds}$   $\dot{\omega}_{DL}$

$T_{Dds}$   $T_{Dds}$

$T_{Din}$   $J_{DM}$   $J_{DL}$   $T_{DL}$

$D_{DM}$   $D_{DL}$

$K_S, D_S$

$$J_{DM} = (2b+1)^2 \cdot G^2 \cdot J_M, \quad D_{DM} = (2b+1)^2 \cdot G^2 \cdot D_M$$

FIG. 9

| | Sum model | Difference model |
|---|---|---|
| Load inertia moment model $J_L$ | $J_w + \mathbf{M}(1 - \lambda)r^2$ | $J_w + r^2 I_z(1 - \lambda)/(2 * (d/2)^2)$ |
| Motor inertia moment model $J_M$ | $J_m G^2$ | $J_m G^2(1 + b_1 + b_2)^2$ |
| Viscosity model $D_S$, $D_M$, $D_L$ | $D_M = D_m G^2$ | $D_M = D_m G^2(1 + b_1 + b_2)^2$ |
| Elasticity model $K_S$ | Common | |
| Assumed anti-resonance frequency $fa=\sqrt{(K_S/J_L)}/(2\pi)$ | Differentiated with $J_L$ | Differentiated with $J_L$ |
| Assumed anti-resonance frequency $fr=\sqrt{(K_S/J_M)}/(2\pi)$ | Differentiated with $J_M$ | Differentiated with $J_M$ |

## INTERNATIONAL SEARCH REPORT

| International application No. |
|---|
| **PCT/JP2024/024575** |

### A. CLASSIFICATION OF SUBJECT MATTER

***B60L 15/20***(2006.01)i; ***B60L 9/18***(2006.01)i
FI:  B60L15/20 S; B60L9/18 P

According to International Patent Classification (IPC) or to both national classification and IPC

### B. FIELDS SEARCHED

Minimum documentation searched (classification system followed by classification symbols)

B60L15/20; B60L9/18

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2023-23912 A (MITSUBISHI JIDOSHA KOGYO KABUSHIKI KAISHA) 16 February 2023 (2023-02-16) | 1-4 |
| A | WO 2021/210369 A1 (MITSUBISHI JIDOSHA KOGYO KABUSHIKI KAISHA) 21 October 2021 (2021-10-21) | 1-4 |
| P, A | WO 2024/038710 A1 (MITSUBISHI JIDOSHA KOGYO KABUSHIKI KAISHA) 22 February 2024 (2024-02-22)<br>paragraph [0048] | 1-4 |

☐ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **22 August 2024** | **03 September 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/024575**

| Patent document cited in search report | Publication date (day/month/year) | Patent family member(s) | Publication date (day/month/year) |
|---|---|---|---|
| JP 2023-23912 A | 16 February 2023 | (Family: none) | |
| WO 2021/210369 A1 | 21 October 2021 | (Family: none) | |
| WO 2024/038710 A1 | 22 February 2024 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019103249 A